# EUROPEAN PATENT SPECIFICATION

(11) **EP 0 638 111 B1**
(45) Date of publication and mention of the grant of the patent: **26.02.1997**
(21) Application number: 93910789.2
(22) Date of filing: 27.04.1993
(51) Int. Cl.: C09J 133/08, C09J 7/02, C08F 220/18

(54) **PLASTICIZER RESISTANT PRESSURE SENSITIVE ADHESIVE FOR VINYL MARKING FILM**
WEICHMACHERBESTÄNDIGER HAFTKLEBER FÜR MARKIERUNGSFILM AUS VINYL-POLYMER
AUTO-ADHESIF RESISTANT AU PLASTIFIANT POUR FILM DE MARQUAGE EN VINYLE

(30) Priority: 28.04.1992 JP 109375/92
(43) Date of publication of application: 15.02.1995
(73) Proprietor: MINNESOTA MINING AND MANUFACTURING COMPANY, St. Paul, Minnesota 55133-3427 (US)
(72) Inventor: MATSUDA, Hiroshi, Yamagato Prefecture 994 (JP)
(74) Representative: VOSSIUS & PARTNER
(86) International application number: US9303882
(87) International publication number: WO9322391

(56) References cited:
- EP-A- 0 338 724
- DE-A- 2 407 494
- US-A- 4 983 656

## Description

The present invention relates to a plasticizer resistant, decorative film and an adhesive therefor.

A decorative film is comprised of a surface film, such as vinyl chloride, on which an adhesive layer is applied or laminated and, in some cases, said adhesive layer is protected by a release film. In the case of possessing a release film, this decorative film is used by applying it on the surface of an adherent (article to be decorated) after removing the release film.

In this case, since the adherent is comprised of a resin having a strong plasticizer migration ability, such as a vinyl chloride resin, when the surface film is a film having a low plasticizer resistance, such as a vinyl chloride sheet, the plasticizer is migrated from the adherent to the surface film, generating wrinkles on the surface sheet and, thereby resulting in the impairment of its decorative characteristics and weathering characteristics. For this reason, a means is required to prevent the deterioration of the surface film due to the migration of the plasticizer from the adherent.

Japanese Unexamined Patent Publication (Kokai) No. 59-5944 discloses a decorative film which prevents the migration of a plasticizer from an adherent to the film by placing a barrier layer comprising a urethane resin between a vinyl chloride surface film and an adhesive layer. In such an aspect, however, the production cost become unduly expensive because of the addition of the barrier layer. Japanese Unexamined Patent Publication (Kokai) No. 3-45671 discloses a decorative film which utilizes a surface film having improved plasticizer resistance due to the content of a urethane resin, and an adhesive containing a plasticizer resistant monomer, such as vinyl acetate.

However, the cost of this decorative film tends to be expensive due to the use of the surface film containing a urethane resin.

EP-A-0 338 724 refers to an acrylic pressure sensitive adhesive that is especially suited for adhering to plasticized PVC and similar substrates. The adhesive contains butyl acrylate, a copolymerizable vinyl compound, α,β-ethylenically unsaturated carboxylic acid, a crosslinker and perferably up to 50% of a tackifier.

DE-A-2407494 discloses a PSA-composition on the basis of a certain composition of acrylic and/or methacrylic acid derivatives. The composition contains a plasticizer.

US-A-4983656 discloses an aqueous pressure sensitive adhesive containing (1) an aqueous copolymer emulsion of at least one alkyl(meth)acrylate, an α,β-unsaturated carboxylic acid and a monomer copolymerizable therewith, (2) a phosphoric acid ester compound and (3) a polyglycidyl compound.

The present invention provides an adhesive film having high plasticizer resistance and capable of preventing the deterioration of a film without placing any barrier layer against a plasticizer, and to provide a decorative film using said adhesive comprising 100 parts by weight of a copolymer having a weight average molecular weight of 700,000-1,200,000 obtained by copolymerization of 64-75% by weight of a (meth)acrylate having a C₄-C₈-alkyl group, 20-26% by weight of methyl methacrylate and 5-10% by weight of acrylic acid, and 0.005 to 0.1 parts by weight of a crosslinker, wherein the amounts of monomers are based on 100% by weight of the total monomer amount(s).

The "(meth)acrylate having a C₄-C₈-alkyl group" which is used in the present invention means an alkyl acrylate or alkyl methacrylate having 4-8 carbon atoms in the alkyl group, the alkyl moiety of which is butyl, pentyl, hexyl, heptyl, or octyl, it being possible for these alkyl groups to be a linear or branched chain. Typical examples of such alkyl acrylates and alkyl methacrylates include 2-ethylhexyl acrylate, n-butyl acrylate, and butyl methacrylate.

The reasons why the amount of the (meth)acrylate having a C₄-C₈-alkyl group should be defined to be 64 to 75% by weight based on 100% by weight the total monomer amount are as follows: if the amount is more than the upper limit, the performance of plasticizer resistance deteriorates, and if it is less than the lower limit, the glass transition point increases and, thus, the adhesion at a low temperature decreases. More preferably, the amount of (meth)acrylate having a C₄-C₈-alkyl group is 70 to 72 parts by weight.

The amount of methyl methacrylate is to be defined in the range of 20-26% by weight based on 100% by weight the total monomer amounts, because the adhesion decreases if it is less than 20% by weight, and conversely the adhesion characteristics at a low temperature decrease if it is more than 26% by weight. The amount of acrylic acid is to be defined in the range of 5-10% by weight based on 100% by weight the total monomer amount, because the adhesion drastically decreases if it is less than 5% by weight, and conversely, the adhesion characteristics at a low temperature decrease if it is more than 10% by weight.

In the copolymerization of the above-described monomer components, a catalyst is preferably used in order to accelerate the polymerization. As such a catalyst, e.g. peroxybenzoyl or azobisisobutyronitrile is used, typical examples of which include e.g. Benper W75® (produced by Daiichi Kasei Kogyo Co., Ltd.) or Lucido L-70® (produced by Pennwalt). The amount of the catalyst used varies depending on the type of the catalyst, but usually is 0.01 to 0.5 part by weight, based on 100 parts by weight of the total monomer amount.

For the purpose of improving the coherent strength, the molecular weight of the polymer is preferably in the range of 700,000 to 1,200,000 because if it is less than 700,000, it is difficult to effectively prevent the generation of wrinkles on the surface film due to the migration of the plasticizer, and if it exceeds 1,200,000, the viscosity increases so much that a solution polymerization can be carried out only with difficulty, which leads to a disadvantage from the viewpoint of production. The weight average molecular weight herein is measured by the gel permeation chromatographic method.

The adhesive of the present invention further contains a bisamide crosslinker or an isocyanate crosslinker in order to improve the coherent strength. Examples of bisamide type crosslinkers include e.g. 1,4-bis(ethyleneiminocarbonylamino)benzene, 4,4'-bis(ethyleneiminocarbonylamino)diphenylmethane, 1,8-bis(ethyleneiminocarbonylamino)octane and typically RD1054® (produced from 3M Company, U.S.A.) can be used. As the isocyanate type crosslinker, 1,4-tolylene diisocyanate and hexamethylene diisocyanate can be mentioned, and typically Coronate L® (produced by Nippon Polyurethane) and Coronate L-55E® (produced by Nippon Polyurethane) may be used.

As the crosslinker of the present invention, the bisamide type is preferable because it has a higher reactivity with the copolymer and, thus, its effect can be exhibited by using a smaller amount, and because it is minimally influenced e.g. by moisture in air, in the air, and only a small variability of crosslinking efficiency can be attained.

The amount of the crosslinker to be added is defined to be in the range of 0.005 to 0.1 part by weight based on 100 part by weight the copolymer. If the amount is less than 0.05 part by weight, the coherent strength does not sufficiently increase, and the migration of the plasticizer and the generation of wrinkles on the surface film resulting therefrom cannot sufficiently be prevented. Conversely, if it is more than 0.1 part by weight, the adhesion retention after the migration of the plasticizer significantly decreases.

In the production of the adhesive of the present invention, the above-mentioned monomers are dissolved in an appropriate solvent, e.g., acetic acid, acetone, hexane, benzene, or a mixture thereof, and the polymerization is initiated by the addition of the above-described catalyst. The polymerization temperature is 40-100°C, and preferably 50-80°C, and the polymerization time is 6-24 hours, and preferably 12-20 hours.

After the polymerization has ended, the crosslinker is added to the formed polymer, after which the adhesive is applied or laminated on the surface film to produce a decorative film of the present invention. As the surface film, any desired decorative film, such as a polyvinyl chloride film, a polyurethane film, or a polyester film, may be used. Particularly, when a film having a relatively low plasticizer resistance, such as a polyvinyl chloride film, is used, the effect of the present invention is attained.

For coating the adhesive of the present invention on a film, a usual means for applying an adhesive can be used. For example, a knife coater, roll coater or a curtain flow coater can be used. The film thickness is 20-200 µm, and preferably 30-100 µm, and the thickness of the adhesive layer is 10-50 µm, and preferably 30-40 µm. On the surface of the adhesive layer of the decorative film according to the invention, a release sheet for protecting the adhesive layer, such as a silicone type release paper or a fluorine release paper, may be applied.

Objects and advantages of this invention are further illustrated by the following examples. All materials are commercially available or known to those skilled in the art unless otherwise stated or apparent.

### Examples

### Production of Film

The production was carried out as follows: prescribed monomeric components and a peroxybenzoyl polymerization catalyst (both varying in their amounts) were dissolved in such an amount of ethyl acetate as to be substantially equal to the total amount of the monomers and catalyst, and the polymerization was carried out at the boiling point of the reaction mixture for 18 hours. After the polymerization, more ethyl acetate was added to the formed polymer to adjust the viscosity of the polymer to an appropriate coating viscosity (2500-3500 mPas (cps) 25°C). To this was added a bisamide crosslinker (RD 1054®, 3M Company, U.S.A.), and the mixture was thoroughly agitated. The polymer was applied on a separator by a knife coater to a thickness of 35 µm after drying, and dried in an oven at 90° C for 2 minutes, after which the formed layer was transferred to a 50 µm thick soft polyvinyl chloride film having been primer-coated, to produce an adhesive film.

### Evaluation

(1) Initial Adhesion
The film produced as described above was cut into 1 inch wide pieces, and each piece was adhered on a polyvinyl chloride adherent containing 55 PHR of dioctylphthalate (55 parts by weight based on 100 parts by weight of the resin) at 20°C at a 65% relative humidity to produce a test piece. This adherent was fixed on an aluminum plate by means of a double sided adhesive tape. The test piece was left standing at 20°C at a 65% relative humidity for 48 hours, and then peel strength was measured at a peeling angle of 180° at a peeling rate of 300.0 mm/min. The scoring criteria was as follows:
- O: 3.0 kg/2.54cm (inch) or more of the initial adhesion
- Δ: 1.0 kg/2.54cm (inch) or more of the initial adhesion
- X: less than 1.0 kg/2.54cm (inch) or more of the initial adhesion

(2) Heat Aged Adhesion
The test piece produced as described in the paragraph of the initial adhesion was aged at 65°C for 1 week, and the peel strength was measured at 20°C at a 65% RH at a peeling angle of 180° at a peeling rate of 300.0 mm/min by using a tensile tester. The rating criteria was the same as those of the initial adhesion.
(3) Appearance Changes (Test for Generation of Wrinkles)
Each sample was applied on a separator to a thickness of 35 µm after drying, dried in an oven at 90°C for 5 minutes, and then laminated on a 50 µm thick soft vinyl chloride film to produce an adhesive film. The adhesive film was cut into 12 x 13 cm pieces, and adhered on a vinyl adherent containing 55 PHR of DOP measuring 15 x 15 cm in size by means of rollers. This was left standing at 65°C for 72 hours, and the generation of wrinkles after the temperature had been cooled to room temperature was visibly observed. The rating criteria was as follows:
- O: not changed
- Δ: slight generation of wrinkles
- X: significant generation of wrinkles.

Table I shows the compositions used in Examples (1-8) and Comparative Examples (C1-C7). Table II summarizes the evaluation of the examples.

**Table I**

| Glossary | |
|---|---|
| AA | acrylic acid |
| MMA | methyl methacrylate |
| 2EHA | 2-ethylhexyl acrylate |
| RD1054® | a bisamide crosslinker |
| L-55E® | an isocyanate crosslinker |

| **Composition** | | | | | | |
|---|---|---|---|---|---|---|
| Examples | AA | MMA | BA | 2EHA | RD10054® | L55E® |
| 1 | 7 | 22 | 47 | 24 | 0.005 | --- |
| 2 | 7 | 22 | 47 | 24 | 0.01 | --- |
| 3 | 7 | 22 | 47 | 24 | 0.05 | --- |
| 4 | 8 | 20 | 50 | 22 | 0.07 | --- |
| 5 | 10 | 26 | 40 | 24 | 0.07 | --- |
| 6 | 5 | 20 | 50 | 25 | --- | 0.01 |
| 7 | 10 | 20 | 35 | 35 | --- | 0.05 |
| 8 | 6 | 25 | 48 | 21 | --- | 0.1 |
| C1 | 3 | 40 | 30 | 27 | 0.003 | --- |
| C2 | 15 | 30 | 40 | 15 | 0.25 | --- |
| C3 | 15 | 15 | 60 | 10 | 0.01 | --- |
| C4 | 30 | 10 | 40 | 40 | 0.08 | --- |
| C5 | 10 | 25 | 45 | 20 | --- | 0.001 |
| C6 | 0 | 18 | 65 | 17 | --- | 0.2 |
| C7 | 6 | 25 | 46 | 21 | --- | --- |

| **Evaluation** | | | | |
|---|---|---|---|---|
| Examples | Mw (10³) | Initial Adhesion | Adhesion After Aging | Appearance Changes |
| 1 | 797 | o | o | o |
| 2 | 797 | o | o | o |
| 3 | 797 | o | o | o |
| 4 | 1150 | o | o | o |
| 5 | 851 | o | o | o |
| 6 | 1030 | o | o | o |
| 7 | 995 | o | o | o |
| 8 | 813 | o | o | o |
| C1 | 502 | x | x | o |
| C2 | 822 | x | x | x |
| C3 | 980 | o | △ | x |
| C4 | 886 | o | △ | x |
| C5 | 1010 | o | x | x |
| C6 | 532 | x | x | x |
| C7 | 813 | o | x | x |

## Claims

1. An adhesive for decorative film having high plasticizer resistance comprising: 100 parts by weight of a copolymer having a weight average molecular weight of 700,000-1,200,000 obtained by copolymerization of 64-75% by weight of a (meth)acrylate having a C₄-C₈-alkyl group, 20-26% by weight of methyl methacrylate and 5-10% by weight of acrylic acid, and 0.005 to 0.1 parts by weight of a crosslinker, wherein the amounts of monomers are defined to be based on 100% by weight of the total monomer amount(s).

2. The adhesive for decorative film as set forth in claim 1, wherein said crosslinker is a bisamide type crosslinker.

3. A decorative film characterized by having the adhesive of claim 1 or 2 applied or laminated on a surface film.

4. A decorative film as set forth in claim 3, wherein said surface film is a polyvinyl chloride.

## Patentansprüche

1. Klebstoff für Dekorationsfolie mit hoher Weichmacherbeständigkeit, umfassend: 100 Gew.-Teile eines Copolymers mit einem Gewichtsmittel des Molekulargewichts von 700000 bis 1200000, erhalten durch Copolymerisation von 64 - 75 Gew.-% eines (Meth)acrylats mit einem C₄-C₈-Alkylrest, 20 - 26 Gew.-% Methacrylsäuremethylester und 5 - 10 Gew.-% Acrylsäure, und 0.005 bis 0.1 Gew.-Teile eines Vernetzungsmittels, wobei die Menge der Monomere so definiert ist, daß sie auf 100 Gew.-% der Gesamtmonomermenge(n) basiert.

2. Klebstoff für Dekorationsfolie nach Anspruch 1, in dem das Vernetzungsmittel ein Vernetzungsmittel des Bisamidtyps ist.

3. Dekorationsfolie, gekennzeichnet dadurch, daß sie den Klebstoff nach Anspruch 1 oder 2 auf einen Oberflächenfilm aufgetragen oder laminiert aufweist.

4. Dekorationsfolie nach Anspruch 3, wobei der Oberflächenfilm ein Polyvinylchlorid ist.

## Revendications

1. Adhésif pour film décoratif ayant une résistance élevée au plastifiant qui comprend : 100 parties en poids d'un copolymère ayant une masse moléculaire moyenne en poids de 700.000 - 1.200.000, obtenu par copolymérisation de 64 - 75 % en poids d'un (méth)acrylate ayant un groupe alkyle en C₄-C₈, de 20 - 26 % en poids de méthacrylate de méthyle et de 5 - 10 % en poids d'acide acrylique, et 0,005 à 0,1 partie en poids d'un agent de réticulation, dans lequel les quantités des monomères sont définies pour être rapportées à 100 % en poids de(s) la quantité(s) totale(s) des monomères.

2. Adhésif pour film décoratif selon la revendication 1, dans lequel ledit agent de réticulation est un agent de réticulation de type bisamide.

3. Film décoratif caractérisé en ce qu'il possède l'adhésif de la revendication 1 ou 2 appliqué ou stratifié sur un film superficiel.

4. Film décoratif selon la revendication 3, dans lequel ledit film superficiel est un poly(chlorure de vinyle).
